# EUROPÄISCHE PATENTSCHRIFT

(11) **EP 1 199 222 B1**
(45) Veröffentlichungstag und Bekanntmachung des Hinweises auf die Patenterteilung: **20.07.2005**
(21) Anmeldenummer: 01124756.6
(22) Anmeldetag: 17.10.2001
(51) Int. Cl.: B60R 16/02, B60R 25/10

(54) **Vorrichtung zur Innenraumüberwachung eines Kraftfahrzeugs und drahtlose Datenkommunikation**
System for vehicle interior surveillance and wireless data communication
Système de surveillance de l'intérieur d'un véhicule et communication de données sans fil

(30) Priorität: 21.10.2000 DE 10052340
(43) Veröffentlichungstag der Anmeldung: 24.04.2002
(73) Patentinhaber: Hella KGaA Hueck & Co., 59552 Lippstadt (DE)
(72) Erfinder: Schriek, Josef, 59556 Lippstadt (DE)

(56) Entgegenhaltungen:
- EP-A- 1 013 518
- DE-A- 3 417 956
- JP-A- 2001 239 897
- US-A- 5 710 671

## Beschreibung

Die vorliegende Erfindung betrifft eine Vorrichtung zur Innenraumüberwachung eines Kraftfahrzeugs nach dem Obergriff des Anspruchs 1.

Derartige Vorrichtungen sind im Stand der Technik allgemein bekannt.

Innenraumüberwachungssysteme zur Diebstahlsicherung von Kraftfahrzeugen sind hinreichend bekannt. Hier kommen im wesentlichen Infrarot-, Ultraschall oder in jüngster Zeit auch Überwachungsanlagen auf Mikrowellenbasis zum Einsatz.

Allen Anlagen gemein sind im Innenraum des Kraftfahrzeugs verteilte Sender und Empfänger, die zur Detektion von Bewegungen geeignet sind und somit ein unberechtigtes Eindringen in das Kraftfahrzeug detektieren können. Die Information wird von einer Kontrolleinheit ausgewertet und ein Alarm wird ausgelöst.

Bei bestehenden Innenraumüberwachungssystemen wird jedoch ein erhebliches Nutzungspotential verschenkt. Die Sende- und Empfangseinheiten sind ohnehin vorgesehen, werden jedoch lediglich für Überwachungszwecke eingesetzt.

Das Problem der vorliegenden Erfindung liegt somit in der Bereitstellung einer Vorrichtung zur Innenraumüberwachung eines Kraftfahrzeugs, die neben einer Überwachung des Innenraums auch weitere Aufgaben übernehmen kann.

Die Lösung des vorliegenden Problems stellt eine Vorrichtung zur Innenraumüberwachung eines Kraftfahrzeugs mit den kennzeichnenden Merkmalen des Anspruchs 1 dar. Durch die Verwendung einer Vorrichtung zur Innenraumüberwachung, die mit einer Modulationseinheit ausgestattet ist, die dazu geeignet ist Datensignale auf die Sendefrequenz zu modulieren und/oder Datensignale aus der Empfangsfrequenz zu extrahieren, wird das bereits bestehende Innenraumüberwachungssystem zur Übermittlung von digitalen Daten im Innenraum eines Kraftfahrzeugs befähigt, wodurch sich mannigfaltige Anwendungsmöglichkeiten zur Steigerung des Fahrkomforts ergeben. Darüber hinaus werden zusätzliche Antennenanlagen eingespart.

Als überaus vorteilhaft erweist es sich, die Kontrolleinheit mit einer universellen Datenschnittstelle, beispielweise einer seriellen oder parallelen Schnittstelle oder sogar mit einer Netzwerkschnittstelle für ein CAN, ein sogenanntes CARNetwork, auszurüsten. Auf diesem Wege können nahezu beliebige Anwendungen, die auf digitaler Basis arbeiten, Daten über die Vorrichtung zur Innenraumüberwachung schicken und empfangen.

Insbesondere Sende- und Empfangseinheiten, die im Infrarotbereich oder im Mikrowellenbereich arbeiten, bieten durch ihre Bandbreite einen ausreichend hohen Datendurchsatz an. Insbesondere Infrarotschnittstellen werden zunehmend in Handys verwendet, so daß eine Kommunikation ohne große Anpassungsmaßnahmen, beispielsweise zwischen Bordcomputer und Handy, möglich werden.

Eine weitere vorteilhafte Anwendungsmöglichkeit stellt die Anwendung im Zusammenhang mit einem passiven Zugangssystem dar. Bei den sogenannten Keyless-Entry / Keyless-Go Systemen müssen digitale Codes zwischen dem im Fahrzeug angeordneten Verriegelungssystem und einem transportablen Schlüssel, zumeist in Form einer Scheckkarte, ausgetauscht werden. Dabei gehört es zum Sicherheitskonzept, daß eine Abfrage der Daten, bzw. eine Authentifizierung zwischen Kraftfahrzeug und Schlüssel im Innenraum des Kraftfahrzeugs stattfindet. Auch hier bietet es sich vorteilhafterweise an, die bestehenden Sende- und Empfangseinheiten für einen derartigen Datenverkehr zu nutzen.

Eine weitere vorteilhafte Anwendungsmöglichkeit besteht beispielsweise in der Einspeisung von digitalisierten Audiosignalen. Im Zusammenhang mit einem geeigneten Kopfhörer, könnten die Fahrgäste separat und ohne Beeinträchtigung des Fahrers mit dem gewünschten Musikprogramm unterhalten werden.

Ebenfalls denkbar ist die Kombination mit einer Fernsteuerung, die beispielsweise zur Steuerung der Klimaanlage oder von Stellantrieben für die Sitzposition oder ähnlichem dient.

Eine weitere vorteilhafte Anwendung stellt insbesondere die Kopplung mit einer mobilen Telefonanlage dar. Hierdurch wird es ermöglicht, über die qualitativ bessere Telefonanlage des Kraftfahrzeugs und existierende GSM- oder UMTS-Netze mit einem Laptop, das mit einer geeigneten Sende- und Empfangseinheit ausgestattet ist, drahtlos im Innenraum eine Verbindung mit dem Internet herzustellen.

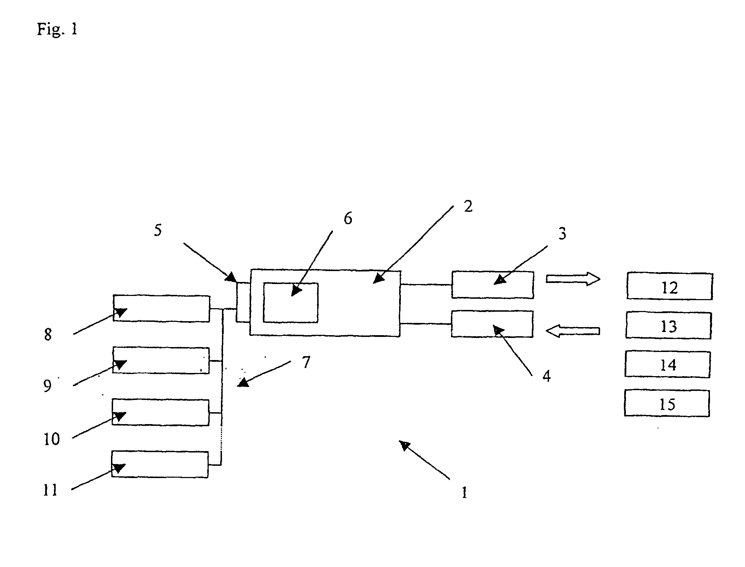

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Darstellung einer erfindungsgemäßen Vorrichtung zur Innenraumüberwachung eines Kraftfahrzeugs.

Eine erfindungsgemäße Vorrichtung 1 zur Innenraumüberwachung eines Kraftfahrzeugs umfaßt im wesentlichen eine Kontrolleinheit 2, sowie im Fahrzeug verteilte Sende- 3 und Empfangseinheiten 4. Die Anzahl und Position der Sende- 3 bzw. Empfangseinheiten 4 hängt im wesentlichen von dem zugewiesenen Überwachungsbereich ab. Sollen beispielsweise separate Fahrgastplätze zur Steuerung einer Klimaanlage überwacht werden, bietet es sich an, jeden Sitzplatz separat mit einer Sende- 3 und Empfangseinheit 4 auszustatten.

Eine erfindungsgemäße Ergänzung einer Vorrichtung zur Innenraumüberwachung 1 mit einer geeigneten Modulationseinheit 6 bietet darüber hinaus mannigfaltige Vorteile. In der hier angedachten Ausführungsform ist die Modulationseinheit 6 beispielsweise mit einem Zugangskontrollsystem 8 und einer digitalen Audioquelle 9 gekoppelt, wobei das Zugangskontrollsystem 8 Zugangscodes in Form von digitalen Datensignalen mit einem Berechtigungsschlüssel, der vom Berechtigten in Form einer Keycard 12 mitgeführt wird, austauschen muß.

Der Datenaustausch erfolgt hier über die Sende- 3 und Empfangseinheiten 4, die bereits durch das Innenraumüberwachungssystem bereitgestellt werden. Dabei ist die Kontrolleinheit 2 mit der Modulationseinheit 6 ausgerüstet, die es erlaubt Datensignale aufzumodulieren und die Überwachungsfrequenz der Vorrichtung 1 zur Innenraumüberwachung als Trägerfrequenz zu nutzen. Dabei ist vorteilhafterweise eine universelle Datenschnittstelle 5, beispielsweise ein Netzwerkanschluss für ein CAN 7, ein CarNetwork, oder eine serielle oder parallele Schnittstelle vorgesehen, die den Anschluss jeder gewünschten Applikation, beispielsweise des hier dargestellten passiven Zugangskontrollsystems 8, einer digitalen Audioquelle 9, einer Steuereinheit für Stellantriebe 10 oder auch einer mobilen Telefonanlage 11 zur Kommunikation mit dem GSM- oder UMTS-Netz ermöglicht.

Zuvor genannte Komponenten können erfindungsgemäß über die Vorrichtung 1 zur Innenraumüberwachung mit der Keycard 12, einer Fernbedienung 13, einem Kopfhörer 14 oder einem Laptop 15 kommunizieren.

Die Kopplungsmöglichkeiten über die Schnittstelle 5 sind derart unbegrenzt, daß im wesentlichen jede Anwendung in Frage kommt, die durch eine drahtlose Übertragung digitaler Signale im Fahrgastraum komfortabler gestaltet werden kann.

## Patentansprüche

1. Vorrichtung zur Überwachung des Innenraums (1) zur Diebstahlsicherung eines Kraftfahrzeugs umfassend mindestens eine im Innenraum angebrachte Sendeeinheit (3) sowie mindestens eine Empfangseinheit (4), wobei eine Kontrolleinheit (2) vorgesehen ist, die durch Ansteuerung der Sende- (3) und Empfangseinheit (4) zur Detektion von Bewegungen geeignet ist, **dadurch gekennzeichnet, daß** die Kontrolleinheit (2) zusätzlich mit einer Modulationseinheit (6) ausgestattet ist, die dazu geeignet ist Datensignale auf eine Sendefrequenz zu modulieren und/oder Datensignale aus einer Empfangsfrequenz zu extrahieren, um mit der Vorrichtung (1) neben des überwachung des Innenraums weitere Aufgaben übernehmen zu können.

2. Vorrichtung nach Anspruch 1, **dadurch gekennzeichnet, daß** die Modulationseinheit mit einer vorzugsweise universellen Datenschnittstelle (5) ausgerüstet ist.

3. Vorrichtung nach Anspruch 1 oder 2, **dadurch gekennzeichnet, daß** die Sende- (3) und Empfangseinheit (4) zur Erzeugung von Frequenzen im Infrarotbereich geeignet ist.

4. Vorrichtung nach einem der Ansprüche 1 bis 3, **dadurch gekennzeichnet, daß** die Sende- (3) und Empfangseinheit (4) zur Erzeugung von Frequenzen im Mikrowellenbereich geeignet ist.

5. Vorrichtung nach einem der Ansprüche 1 bis 4, **dadurch gekennzeichnet, daß** ein passives Zugangskontrollsystem (8) vorgesehen ist, wobei Datensignale zwischen dem Zugangskontrollsystem (8) und einem Schlüsselelement (Keycard 12) ausgetauscht werden können.

6. Vorrichtung nach einem der Ansprüche 1 bis 5, **dadurch gekennzeichnet, daß** eine digitale Audioquelle (9) vorgesehen ist, wobei es sich bei den Datensignalen um digitalisierte Audiosignale handelt, die von einem geeigneten Kopfhörer (14) aufgenommen werden können.

7. Vorrichtung nach einem der Ansprüche 1 bis 6, **dadurch gekennzeichnet, daß** eine Fernsteuerung (12) vorgesehen ist, die zum Empfang und zum Senden von Datensignalen geeignet ist und zur Steuerung von Fahrzeugstellantrieben (10) oder Fahrzeugelektrikkomponenten geeignet ist.

8. Vorrichtung nach einem der Ansprüche 1 bis 8, **dadurch gekennzeichnet, daß** eine mobile Telefonanlage (11) vorgesehen ist, wobei Datensignale übertragen werden können, die von einem Laptop (15) oder einem Telefon empfangen werden können.

## Claims

1. Device for monitoring the interior (1) of a motor vehicle and wireless data communication for theft prevention, comprising at least one transmitter (3) accommodated in the interior and at least one receiver (4), and a control unit (2) is provided which is suitable for detection of movement by way of controlling the transmitter (3) and receiver (4), **characterised in that** the control unit (2) is additionally equipped with a modulator (6) which is suitable for modulating data signals on a transmit frequency and/or extracting data signals from a receive frequency in order that the device (1) can take over additional duties apart from monitoring of the interior.

2. Device according to Claim 1, **characterised in that** the modulation unit is equipped with a preferably universal data interface (5).

3. Device according to Claim 1 or 2, **characterised in that** the transmitter (3) and receiver (4) are suitable for generating frequencies in the infrared range.

4. Device according to one of Claims 1 to 3, **characterised in that** the transmitter (3) and receiver (4) are suitable for generating frequencies in the microwave range.

5. Device according to one of Claims 1 to 4, **characterised in that** a passive access control system (8) is provided, and data signals can be exchanged between the access control system (8) and a key element (keycard 12).

6. Device according to one of Claims 1 to 5, **characterised in that** a digital audio source (9) is provided, and the data signals are digitalised audio signals which can be picked up by a suitable headset (14).

7. Device according to one of Claims 1 to 6, **characterised in that** a remote control (12) is provided which is suitable for receiving and transmitting data signals and for controlling vehicle setting drives (19) or vehicle electric components.

8. Device according to one of Claims 1 to 7, **characterised in that** a mobile telephone unit (11) is provided, and data signals can be transmitted which can be received by a laptop (15) or a telephone.

## Revendications

1. Dispositif de surveillance de l'habitacle (1) pour réaliser une sécurité antivol d'un véhicule automobile, comprenant au moins une unité émettrice (3) montée dans l'habitacle ainsi qu'au moins une unité réceptrice (4), dans lequel est prévue une unité de contrôle (2) qui est appropriée à détecter des mouvements par le pilotage de l'unité émettrice (2) et de l'unité réceptrice (4), **caractérisé en ce que** l'unité de contrôle (2) est additionnellement équipée d'une unité de modulation (6) qui est appropriée pour moduler des signaux de données sur une fréquence émettrice et/ou pour extraire des signaux de données à partir d'une fréquence de réception pour pouvoir, en plus de la surveillance de l'habitacle, prendre en charge d'autres fonctions au moyen du dispositif (1).

2. Dispositif selon la revendication 1, **caractérisé en ce que** l'unité de modulation est équipée d'une interface de données (5) de préférence universelle.

3. Dispositif selon l'une ou l'autre des revendications 1 et 2, **caractérisé en ce que** l'unité émettrice (3) et l'unité réceptrice (4) sont appropriées pour engendrer des fréquences dans la gamme infrarouge.

4. Dispositif selon l'une des revendications 1 à 3, **caractérisé en ce que** l'unité émettrice (3) et l'unité réceptrice (4) sont appropriées pour engendrer des fréquences dans la gamme micro-ondes.

5. Dispositif selon l'une des revendications 1 à 4, **caractérisé en ce qu'**il est prévu un système de contrôle d'accès (8) passif, les signaux de données pouvant être échangés entre le système de contrôle d'accès (8) et un élément à clé (Keycard 12).

6. Dispositif selon l'une des revendications 1 à 5, **caractérisé en ce qu'**il est prévu une source audio (9) numérique, et les signaux de données sont des signaux audio numérisés qui peuvent être reçus par un écouteur (14) approprié.

7. Dispositif selon l'une des revendications 1 à 6, **caractérisé en ce qu'**il est prévu une télécommande (12) qui est appropriée pour recevoir et pour émettre des signaux de données et pour commander des mécanismes de réglage de véhicule (10) ou des composants électriques de véhicule.

8. Dispositif selon l'une des revendications 1 à 7, **caractérisé en ce qu'**il est prévu une installation téléphonique mobile (11), dans laquelle il est possible de transmettre des signaux de données qui peuvent être reçus depuis un ordinateur portable (15) ou depuis un téléphone.
